Europäisches Patentamt

European Patent Office

Office européen des brevets

(19)

(11) **EP 1 511 254 A2**

(12) **EUROPEAN PATENT APPLICATION**

(43) Date of publication:
**02.03.2005 Bulletin 2005/09**

(51) Int Cl.$^7$: **H04L 27/00**

(21) Application number: **04105374.5**

(22) Date of filing: **17.06.2002**

(84) Designated Contracting States:
**AT BE CH CY DE DK ES FI FR GB GR IE IT LI LU MC NL PT SE TR**

(30) Priority: **20.06.2001 EP 01401631**

(62) Document number(s) of the earlier application(s) in accordance with Art. 76 EPC:
**02751033.8 / 1 402 695**

(71) Applicant: **Freescale Semiconductor Inc.**
**Austin, TX 78735 (US)**

(72) Inventors:
• **Lehning, Heinz**
  **1295 Tannay (CH)**
• **Gercekci, Anil**
  **1293 Bellevue (CH)**
• **Simoens, Sebastien**
  **78210 St. Cyr L'Ecole (FR)**

(74) Representative: **Wray, Antony John et al**
**Freescale Semiconductors,Inc**
**c/o Impetus Limited,**
**Grove House,**
**Lutyens Close,**
**Chineham Court**
**Basingstoke, Hampshire RG24 8AG (GB)**

Remarks:
This application was filed on 28 - 10 - 2004 as a divisional application to the application mentioned under INID code 62.

(54) **Compensation of mismatch between quadrature paths**

(57) A method of signal mismatch compensation comprising: applying a first training signal, of known characteristics, to a circuit which includes at least one baseband filter, receiving a baseband filtered training signal, from the circuit, deriving a transfer function from the received baseband filtered signal; obtaining the inverse transfer function and applying the inverse transfer function to a subsequently received signal in order to correct any signal mismatch in the subsequently received signal.

FIG. 17

**Description**

**Field of the Invention**

The present invention relates to an apparatus for improving signal mismatch compensation and a related method. The apparatus and related method are particularly, but not exclusively, suitable for use with Radio Frequency (RF) Wireless Local Area Networks (WLAN's).

**Background of the Invention**

As greater demands are placed on RF systems, for example in WLAN's, in order to increase channel capacity by utilizing available bandwidth, corresponding demands are placed upon performance and tolerance of components used in their RF circuits.

Various standards have been developed in order to increase channel capacity. HIPERLAN 2 is a Wireless Local Area Network (WLAN) protocol, based on, and incorporating, an Orthogonal Frequency Division Multiplexing (OFDM) scheme.

An advantage of using an OFDM scheme for transmitting RF signals is that it is possible to transmit more data for a given channel bandwidth than was previously possible. OFDM transceivers are used in Digital Audio Broadcast (DAB); Digital Video Broadcast (DVB); Asymmetric Digital Subscriber Loop (ADSL) transmission techniques, as well as wireless broadband transmission techniques such as IEEE 802.11A; and the Japanese MMAC standard. Most systems require transmit and receive sections for bi-directional communication. DVB is an exception due to its one way communication nature.

The following modulation formats may be incorporated in the HIPERLAN 2 scheme: Binary Phase Shift Keying (BPSK); Quadrature Phase Shift Keying (QPSK); and Quadrature Amplitude Modulation (16 QAM) or 64 QAM. The flexibility of use of the aforementioned modulation techniques means that data rates of between 6 and 54 Mbit/s can be transmitted.

A particular advantage of the HIPERLAN 2 scheme is that systems incorporating it may be used in offices, shops, airports or in similar environments, which were previously prone to multipath dispersion. This is because RF transmissions which use HIPERLAN 2 are reflection resistant.

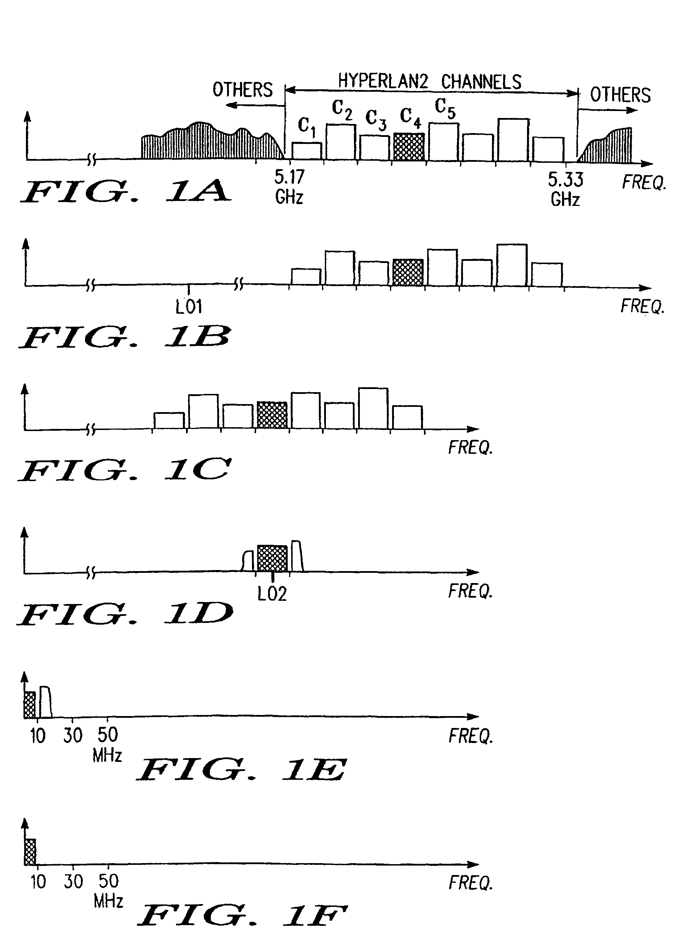

Typically HIPERLAN 2 operates at 5.5 GHz with multiple channels; each channel has 52 active sub-carriers within a 20 MHz bandwidth. OFDM modulation schemes require two component signals to be in phase quadrature. The two component signals are referred to as the I and Q signals. During operation, and following down conversion to a base-band signal, the base-band signal of interest has two 10 MHz side band signals, at which sub-carrier frequencies, the I and Q component signals lie. Figures 1a and 1b illustrate diagrammatically how close together the sub-carrier channels are one from another.

However, because only a relatively small frequency band separates adjacent sub-carrier channels, even small changes in component characteristics can cause variations in the overall behaviour of a device to signals. These changes, which may arise as a result of thermal drift, can give rise to, for example, variations in device characteristics. This in turn can cause cross-talk interference between adjacent sub-carriers. Typically a change in overall absolute tolerance of $\pm16\%$ of passive components' value, prevents a filter from achieving the required -27dB stop band performance needed in HIPERLAN 2.

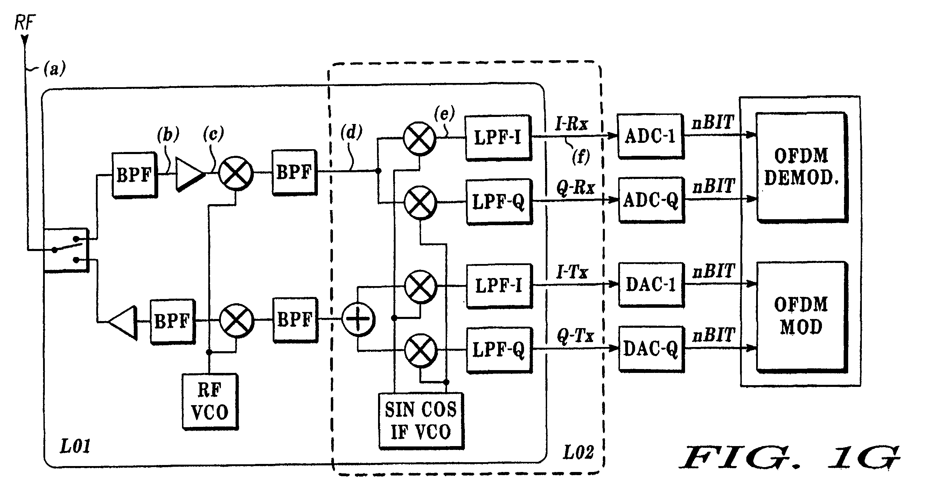

So as to assist in the understanding of the invention a basic description of Orthogonal Frequency Division Multiplexing (OFDM) is provided with reference to Figures 1 to 4. The time domain signal transmitted to an OFDM transceiver 10 consists of a sum of (K) sinusoidal waveforms of different amplitudes A(i) and phases $\phi$(i). At transmission of the RF signal, digital information is mapped onto the (K) sub-carrier signals or sub-carriers. These signals are then transformed into time domain signals using Inverse Fast Fourier transform (IFFT). Denoting the sampling period T, the duration of the IFFT output block is $T_u$ = NT (where N>K). A cyclic extension of length $T_e$ can be added before the block, forming a symbol of duration denoted as $T_p = T_u + T_e$. The sample block is serialized and converted to an analog signal.

The sub-carrier spacing is $1/T_u$. The sub-carriers are of overlapping frequencies. However, the IFFT guarantees that data mapped on each frequency can be recovered independently from data carried on the (K-1) other sub-carriers by means of a Fast Fourier Transform (FFT) and that this has no influence on data content of other sub-carriers. This is a result of processing theory. Orthogonal Frequency Division Multiplexing exploits this principle. Hence OFDM ensures very efficient use of available bandwidth for a given data transmission speed.

A time domain signal (consisting of successive symbols) is converted from digital to analog and up-converted to an RF centre frequency ($f_c$) using appropriate frequency shifts by way of frequency mixers (not shown). The RF signal is then transmitted through an appropriate medium. Thus, the OFDM signal contains (K) sub-carriers at frequencies $f_c + i/T_u$. A received RF signal ($R_{fc}$) is translated to a base band signal; converted from analog to a digital signal;

and then transformed to the frequency domain using Fast Fourier Transforms after having removed its cyclic extension. Information is recovered in the form A(i) and φ(i). This information is then de-mapped into its basic elements in order to recover a transmitted digital bit stream.

The so-called front end 40 of a receiver down-converts a received signal (in the 5.15-5.725 GHz band) and provides base band information to the digital signal processor device. Conversion can be done in two steps, for example as in a standard heterodyne receiver which uses an appropriate intermediate frequency (IF). After the IF frequency there are two possibilities to convert the analog signal for transportation to analog-to-digital converters (ADC's) 57 and 58. These are: analog I-Q generation (base band); and down conversion to a second, low intermediate frequency (IF).

Analog I-Q generation requires mixing the IF signal using two mixers: one multiplies the signal with a sine function, thereby generating the I signal; and the other multiplies with a signal (of the same frequency) but phase shifted by 90 degrees, such as cosine function, in order to generate the Q signal. All analog treatment during and after this multiplication: such as base-band low pass filtering used for channel selectivity; mixing; amplification and analog to digital conversion; are thereafter subject to mismatch. Base-band low pass filtering is required to eliminate adjacent channels from interfering with the selected signal channel during analog-to-digital conversion.

These mismatches are due to slight differences in the values and behaviour of active and passive elements found in I and the Q signal paths, even though great care is taken in the design and layout of these elements in a symmetrical way during the design of the system and/or circuit. Mismatches are even more pronounced when the aforementioned effects of thermal drift are taken into account.

One way of envisaging down conversion of the RF signal to base-band (I and Q signals) in the receiver, is to imagine that the original RF channel is 'folded in half' around the centre frequency, such that the (I and Q) base-band signals have effectively half the bandwidth compared with the corresponding RF channel. In base band the original RF centre frequency occurs at DC and sub-carriers that were symmetrically located to the left and right of the centre frequency (in RF), following down conversion, the sub-carriers effectively become superimposed onto each other, so that they occur in pairs on half the number (K/2) of sub-carrier frequencies in base-band. Only precisely matched I and Q signal generation and signal treatment throughout the processing chain, allows correct demodulation of the information to be performed by exact superimposition of sub-carriers. Any mismatch between I and Q signal paths, however small, results in cross-talk between the superimposed sub-carriers. Given the tolerances imposed, such cross-talk reduces the available bandwidth for data transmission and/or introduces unacceptable errors.

It will be appreciated that the same criteria apply for transmitter signal processing, however in reverse order.

The outcome of this mismatch is that the representation of A(i) and φ(i), of the various sub-carriers may not be correct and can cause decoding errors of the base-band signal.

**Prior Art**

Many I/Q compensation techniques only deal with a mismatch which remains constant over the whole frequency band of the signal. For instance, in a system disclosed in US Patent US-A-5 263 196 (Motorola) the frequency-independent part of the mismatch is estimated and compensated in the time-domain. This method applies well to narrow band signals.

UK patent application GB-A-2,272,589 by Linear Modulation Technology describes a Cartesian amplifier in which an input signal is pre-processed and split into two quadrature components. Both quadrature components are passed, in parallel, through an error amplifier, after which they are re-combined and up-converted from RF to baseband and resolved into two quadrature components, which are fed into respective inputs of the error amplifier. Periodically the pre-processor is switched into a calibration mode in which test signals are applied to the amplifier instead of the input signal. At these times, the signal strength of the output of the power amplifier is measured and used to provide pre-distortion factors in the signal pre-processor to improve amplifier linearity. Notably, GB-A-2,272,589 calibrates *'frequency-independent'* I/Q imbalance.

US Patents US-A-4 003 054 (Raytheon) and US-A-5 872 538 (Lockheed Martin) deal with frequency-domain processing of a training signal to estimate frequency-dependent I/Q mismatch. Both differ from the present invention in several respects. Firstly they operate in receive mode only as they are adapted for radar-processing; and secondly, neither makes reference to an estimation of the transmit I/Q mismatch, nor to any pre-compensation. Additionally the systems described send several training chirp signals, prior to input of signals to down conversion mixers.

Another difference is that compensation is applied to a narrow band signal which is transmitted on an unknown frequency, whereas in the present invention, the signal extends over a large set of known frequencies. In particular the arrangement described in US-A-4 003 054 requires generation of several training pulses or chirps used for calibration. The chirps are used to modulate a carrier signal, which in turn is then phase shifted in order to simulate a Doppler shifted signal. The simulated Doppler shifted signal is then applied to the quadrature detector which is being calibrated. Further processing of a plurality of signals is then required in order to derive a frequency spectrum of the simulated Doppler shift. Again substantial processing needs to be performed on the data in order to derive correction signals for each of the imbalances in the quadrature demodulated frequency components of the signals to be corrected. Therefore the amount of signal processing, as well as the processing capability required, is substantial.

An object of the present invention is to eliminate errors arising from mismatch characteristics of active and passive devices, by improving signal mismatch compensation, particularly in OFDM devices and associated systems.

### Summary of the Invention

In accordance with aspects of the present invention, there is provided a method and apparatus for signal mismatch compensation as defined in the appended Claims.

Preferred embodiments of the Invention will now be described, by way of example only, and with a reference to the Figures, in which:

### Brief Description of Figures

Figures 1(a)-1(f) show diagrammatical representations of key processing stages performed on a received analog RF signal, in a HIPERLAN 2 receiver;

Figure 1(g) is a block diagram of a HIPERLAN 2 transceiver system, showing diagrammatically each processing stage of the signals shown in Figures 1(a) to 1(f);

Figure 2 illustrates schematically OFDM modulation;

Figure 3 is a diagrammatical representation of separation of I and Q signals and demodulation of two base-band signals;

Figure 4 is a Table of Equations, which model the two sub-carriers shown in Figure 3;

Figure 5 is a block diagram showing an example of a demodulation scheme for base-band I and Q signals;

Figure 6 is a Table of Equations which describe demodulation in a mixer or oscillator suffering from cross-talk;

Figure 7 is a circuit suitable for first order sub-carrier cross talk compensation;

Figures 8 and 9 depict signal paths for compensating respectively Filter pairs F3 and F4 and F5 and F6;

Figure 10 is a graph of base-band low pass filter characteristics;

Figure 11 is a graph showing transmit filter mismatch characteristics;

Figure 12 is a graph showing receive filter mismatch characteristics;

Figure 13 is a constellation diagram showing simulated received QPSK signals without filter mismatch compensation;

Figure 14 is a constellation diagram showing simulated received QPSK signals with filter mismatch compensation;

Figure 15 is a block diagram of a conventional I/Q low pass filter system;

Figure 16 is a block diagram illustrating the principle of base-band low pass filtering in a HIPERLAN 2 transceiver;

Figure 17 shows a functional diagram of a signal path for pre and post compensation in filters in a HIPERLAN 2 transceiver; and

Figures 18-21 show functional diagrams of mixer compensation in a HIPERLAN 2 transceiver.

**Detailed Description of Figures**

According to a preferred embodiment of the invention there is provided a method of signal mismatch compensation comprising: applying a first training signal, of known characteristics, to a circuit which includes at least one filter, receiving a filtered training signal, from the circuit, deriving a transfer function from the received filtered signal; obtaining the inverse transfer function and applying the inverse transfer function to a subsequently received signal in order to correct any signal mismatch in the subsequently received signal.

Transmit and receive filters may be combined to form a single set of filters which may be used in both transmit and receive modes, in conjunction with one or more multiplexers. This enables the invention to be used in both half-duplex and full-duplex modes. An advantage of this is that compensation training is performed only once and post compensation parameters for receive, as well as pre-compensation parameters for transmit, are the same. Transmit and receive paths are preferably selected by multiplexers before and after filters are switched to receive or transmit instants of the protocol from a base-band DSP.

This preferred embodiment of the invention requires two signal paths for reception, using two Analog to Digital Converters (ADCs); and two signal paths for transmission, using two Digital to Analog Converters (DACs), between the analog and digital transceiver sections. Since in this second aspect, RF signals are transported within half the available OFDM channel bandwidth; signals can be sampled (converted) and processed, with relatively little power consumption. Therefore, under particular circumstances, it is more efficient to employ the aforementioned solution when applied to some components, (for example filters).

Means may be provided for generating a test or training signal digitally and sending a time domain sample of the test or training signal to a DAC and subsequently to an RF transceiver in a test mode. This may be achieved by routing the test signal through the I and Q paths of the transmit chain, or routing the test signal through the I and Q paths of the receive chain. This digitally generated test or training signal is advantageously used to compensate frequency mismatch in filters.

Another advantage of the preferred embodiment of the present invention is that it has no image channel at down conversion to base-band at reception. The second method however is more difficult to implement for OFDM because it demands high quality matching between the I and Q signal paths, in order to avoid signal impairment.

An OFDM transceiver with analog I/Q generation may be envisaged as comprising signal treatment blocks that are essentially down converters, I/Q generators, analog/digital converters (ADC) and digital signal processors (DSP's) for the receive path; digital/analog converters (DAC's); I/Q summation means; and up mixers, for the transmit path. The expressions Digital Signal Processor (DSP's) and base-band controller are used synonymously throughout the present Application.

It will be appreciated that DSP architecture may vary from a dedicated state machine to a generic software driven processor.

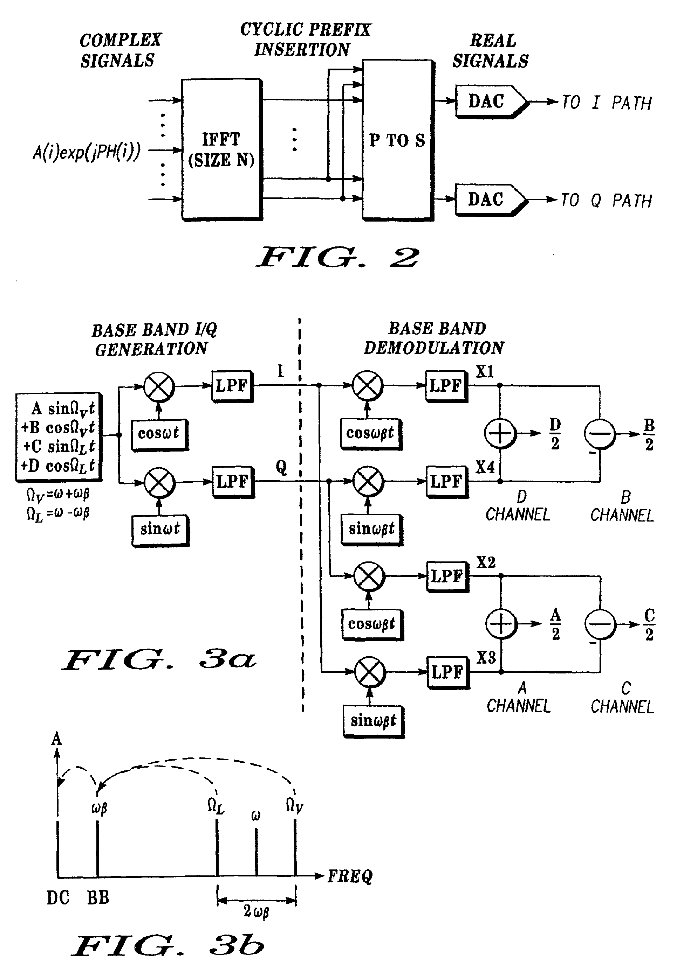

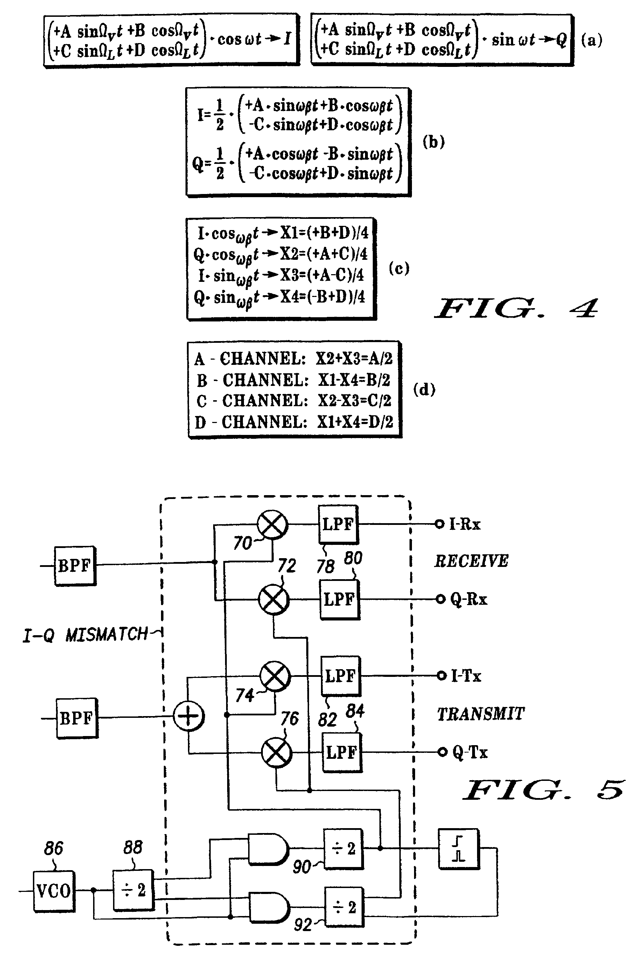

Referring to the Figures, and specifically Figures 1 and 3, and the Table in Figure 4, Figure 3 shows a simple analog model of I/Q signal flow from input signal to decoded data. The left hand side of Figure 3 represents the conversion from IF to base band (I and Q). The IF input signal is written in Cartesian components of two frequencies that are equally spaced left and right of the centre frequency. The right hand side of Figure 3 represents digital signal processing of a base band signal to final "recovered" digital data. Four independent data channels A, B, C and D are recovered as sums and differences of four intermediate signals (called X1, X2, X3, X4 in Figure 3). Channels A, B, C and D carry information from both sub-carriers, shown superimposed in Figure 1f.

To the left of the dotted line in Figure 3 there is shown in diagrammatical form a frequency translation from IF to base band (BB) to final data components (DC). The table in Figure 4 shows the equations modelling this, for an ideal case, where no mismatches are present.

In a demodulation system working with analog I and Q signals, it is apparent that signal mismatches reside in the analog stage(s) of the signal processing. The analog to digital (receiver) and digital to analog (transmitter) conversion stages, and the digital signal processing are usually of much higher precision and matching than the analog signal processing.

Figure 5 shows in block form an example circuit for generating I and Q signals in analog. In order to avoid frequency mismatch it is essential that the following components are matched: Mixers 70 with mixer 72 and mixer 74 with mixer 76. Also filters 78 and 80 need to be matched and filters 82 and 84; as well as input characteristics of summation inputs SU1-SU2; and dividers DIV1 and DIV2. However, as stated before this is not practical as drift and thermal effects alter characteristics of the components.

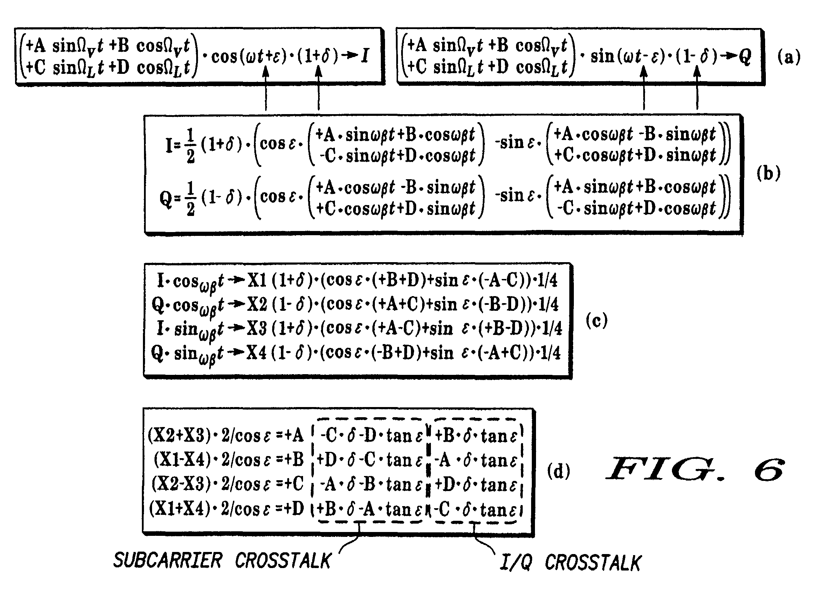

The generation of the I and Q phases is controlled by a clock signal provided by a Voltage Controlled Oscillator 86, gates G1-G2 and dividers 88, 90 and 92. The table in Figure 6 shows equations (taking into account timing and amplitude mismatches) of a local oscillator I and Q-phases for outputs from mixers, for example of the type shown in Figure 3. It can be seen that a major source of impairment is as a result of cross-talk between superimposing sub-carriers. This cross-talk interference is shown in the Equations in Figure 6 as comprising two terms: the first arising as sub-carrier cross-talk and the second as I/Q cross-talk.

I and Q components are obtained and can be used to train either the transmit or the receive path as described below.

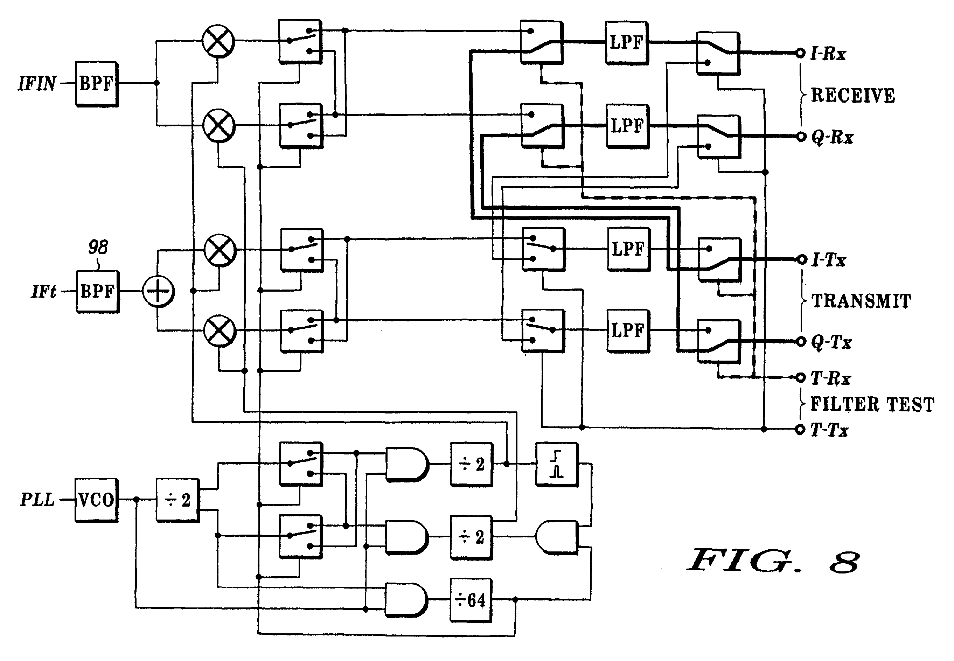

Digital Signal Processing for receive path Filter compensation is described with reference to Figure 8.

The aim of the receiver training structure is to feed in-phase (I) component of the training signal into the I path of the receiver and the quadrature (Q) component of the training signal, into the Q path of the receiver. Therefore, in the embodiment of Figure 8, the in-phase component of the training signal successively goes through switches S13, S7 and S11 while the quadrature component of the training signal is going through switches S14, S8 and S12. However, an alternative path for the Q component (not depicted) may be S13, S8 and S12. The advantage of the first embodiment is that the I and Q training components can be transmitted and received simultaneously. An advantage of the alternative embodiment is that the I and Q training components are transmitted through the same analog to digital converter.

The received training signal is thereafter demodulated by the OFDM demodulator in order to recover each packet with frequency components R(i) corresponding to D(i). At the output of the Fast Fourier Transform (FFT), the sub-carriers are grouped by pairs (R(i), R(-i)) and processed separately.

There are two implementations:

In the first preferred embodiment, there are K/2 pairs of cross-talk coefficients:
(a(i),b(i))= (R(i),R(-i)*) for all (i) from 1 to K/2, where * denotes complex conjugation.
A compensation matrix $M_R(i)$ is obtained for each pair of sub-carriers. This matrix is a real valued matrix of size (4,4) and is obtained by inverting the cross-talk matrix. In the preferred embodiment, matrix $M_R(i)$ is the following:

$$M_R(i) = inv \begin{pmatrix} \Re(a(i)) & -\Im(a(i)) & \Re(b(i)) & \Im(b(i)) \\ \Im(a(i)) & \Re(a(i)) & \Im(b(i)) & -\Re(b(i)) \\ \Re(b(i)) & -\Im(b(i)) & \Re(a(i)) & \Im(a(i)) \\ -\Im(b(i)) & -\Re(b(i)) & -\Im(a(i)) & \Re(a(i)) \end{pmatrix}$$

After the estimation has been performed, each received data packet can be compensated after the FFT by multiplying each pair (R(i),R(-i)) of sub-carriers by $M_R(i)$ to obtain a pair of mismatch compensated sub-carriers ($R_c(i)$, $R_c(-i)$) in the following manner:

$$\begin{pmatrix} \Re(Rc(i)) \\ \Im(Rc(i)) \\ \Re(Rc(-i)) \\ \Im(Rc(-i)) \end{pmatrix} = M_R(i) \begin{pmatrix} \Re(R(i)) \\ \Im(R(i)) \\ \Re(R(-i)) \\ \Im(R(-i)) \end{pmatrix}$$

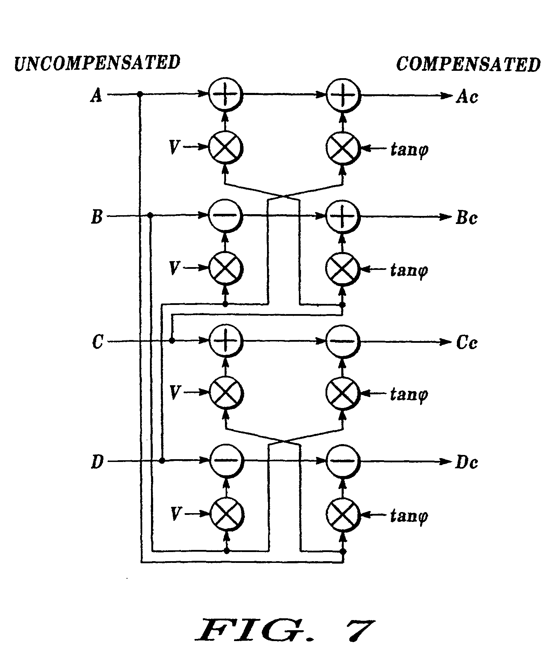

A simplified compensation scheme is shown in Figure 7 (for a pair of sub-carriers). This scheme is less computational and is based on first order cross-talk compensation. For a given pair of sub-carriers of index i and -i, it only requires the storage of two (real valued) cross-talk parameters $\nu(i)$ and $\tan(\varphi(i))$, where $\nu$ and $\varphi$ are respectively half the amplitude mismatch and half the phase mismatch between the I and Q receive filters.

Keeping the notations of the section, for a given pair of sub-carriers, the parameters $\nu(i)$ and $\tan(\varphi(i))$ are obtained by obtaining the product of receive filter complex gain by the cross-talk on the sub-carrier of index -I; deriving the receive filter complex gain only on sub-carrier of index I; removing the gain from sub-carrier -i (so that only the cross-talk remains and finally, taking the real and imaginary part of the result to obtain $\nu(i)$ and $\tan(\varphi(i))$, which are respectively the amplitude and phase mismatch of the filter. This is summarized by the following complex operations:

$$\nu(i) = \Re\left(\frac{R(-i)}{R^*(i)}\right)$$

and

$$\tan[\varphi(i)] = -\Im\left(\frac{R(-i)}{R^*(i)}\right)$$

where * denotes the complex conjugation.

The compensation is performed by a linear combination of real and imaginary components of each pair of received symbols R(i) and R(-i).

With the notations:

$$A = -\Im(R(i)) \quad ; B = \Re(R(i)) \,; C = -\Im(R(-i)) \,; D = \Re(R(-i))$$

the compensated versions $A_c$ ; $B_c$ ; $C_c$ ; $D_c$ are obtained as described in figure 7 by:

$$A_c = A + C\nu(i) + D\tan(\varphi(i))$$

$$B_c = B - D\nu(i) + C\tan(\varphi(i))$$

$$C_c = C + A\nu(I) - B\tan(\varphi(I))$$

$$D_c = D - B\nu(i) - A\tan(\varphi(i))$$

Digital Signal Processing for transmit path Filter pre-compensation is now explained.

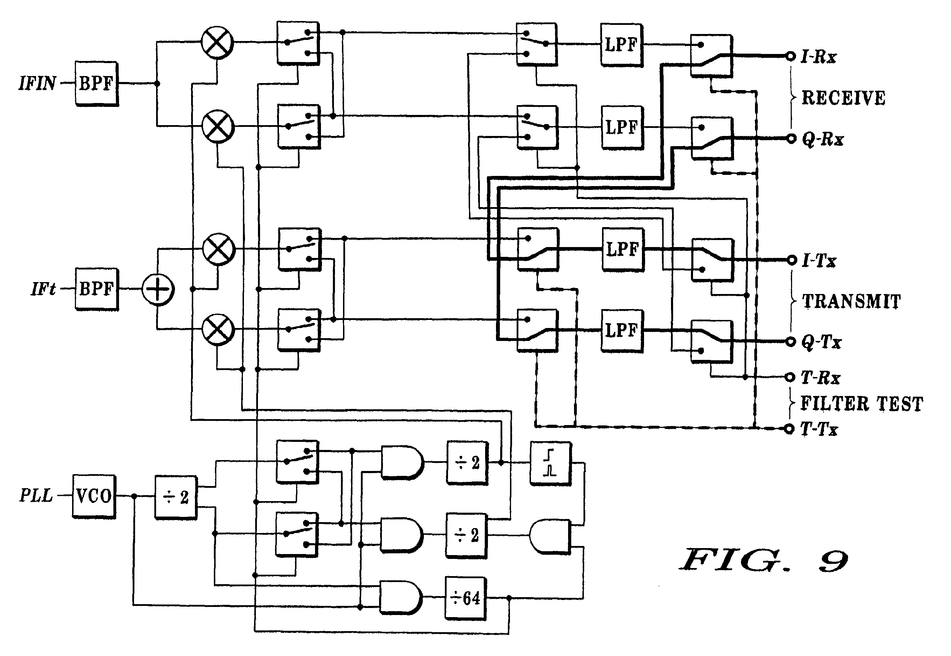

The aim of the transmitter training structure is to feed the in-phase (I) component of the training signal into the I path of the transmitter and the quadrature (Q) component of the training signal into the Q path of the transmitter. Therefore, in Figure 9, the in-phase component of the training signal successively passes through switches S13, S9 and S11, while the quadrature component of the training signal passes through switches S14, S10 and S12. However, an alternative path for the Q component (not depicted) is: S14, S10 and S11. The advantage of the first embodiment is that the I and Q training components can be transmitted and received simultaneously. The advantage of the alternative is that the I and Q training components are transmitted through the same analog to digital converter.

The received training signal is thereafter demodulated by the OFDM demodulator in order to recover each packet with frequency components T(i) corresponding to D(i). At the output of the FFT, the sub-carriers are grouped by pairs (T(i),T(-i)) and processed separately.

Then there can be two implementations:

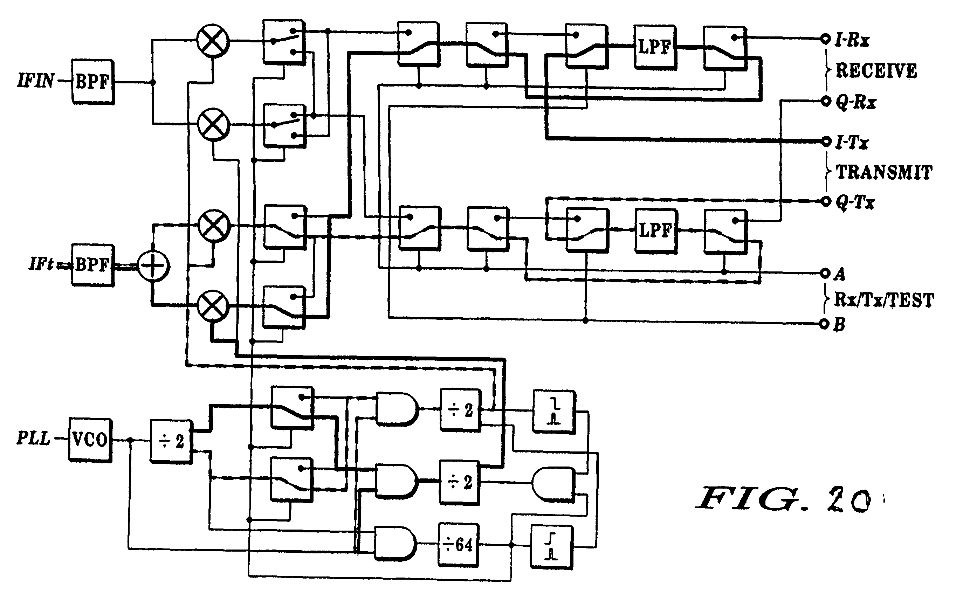

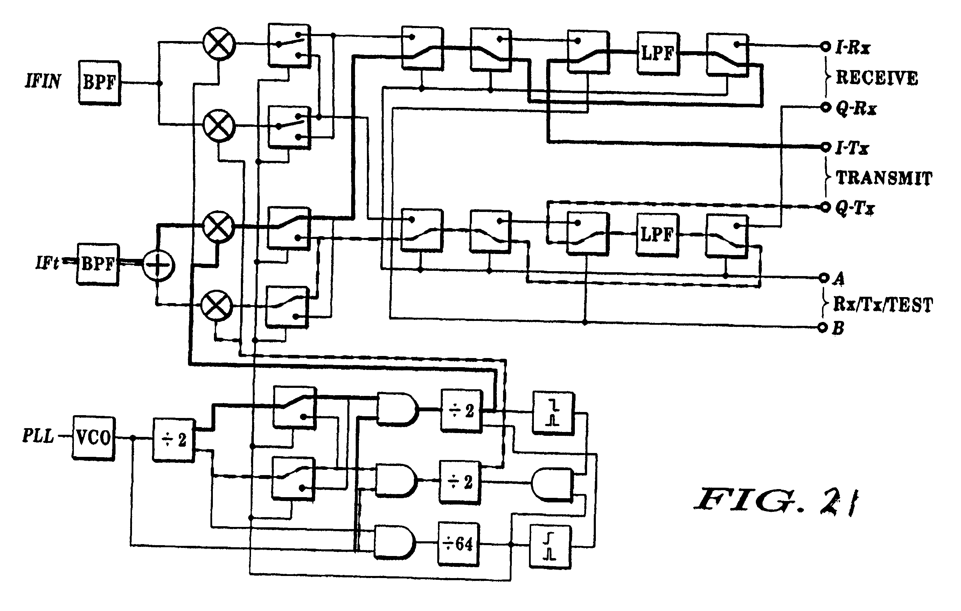

In the preferred embodiment (see Figure 20 and 21), there are K/2 pairs of cross-talk coefficients: (c(i),d(i)) = (T(i),T(-i)*) for all i equal 1 to K/2, where * denotes complex conjugation.

Finally a compensation matrix $M_T(i)$ is obtained for each pair of sub-carriers. This matrix is a real valued matrix of size (4,4) and is obtained by inverting the cross-talk matrix.

In the preferred embodiment, matrix $M_T(i)$ is the following:

$$M_T(i) = inv \begin{pmatrix} \Re(c(i)) & -\Im(c(i)) & \Re(d(i)) & \Im(d(i)) \\ \Im(c(i)) & \Re(c(i)) & \Im(d(i)) & -\Re(d(i)) \\ \Re(d(i)) & -\Im(d(i)) & \Re(c(i)) & \Im(c(i)) \\ -\Im(d(i)) & -\Re(d(i)) & -\Im(c(i)) & \Re(c(i)) \end{pmatrix}$$

After the estimation has been performed, each data packet to be transmitted can be pre-compensated before the IFFT by multiplying each pair $(T(i),T(-i))$ of sub-carriers by $M_T(i)$ to obtain a pair of mismatch compensated sub-carriers $(T_c(i),T_c(-i))$ in the following manner:

$$\begin{pmatrix} \Re(Tc(i)) \\ \Im(Tc(i)) \\ \Re(Tc(-i)) \\ \Im(Tc(-i)) \end{pmatrix} = M_T(i) \begin{pmatrix} \Re(T(i)) \\ \Im(T(i)) \\ \Re(T(-i)) \\ \Im(T(-i)) \end{pmatrix}$$

A simplified compensation scheme is shown in Figure 7 (for a pair of sub-carriers). This scheme is less computational and is based on first order cross-talk compensation. For a given pair of sub-carriers of index i and -i, it only requires the storage of two (real valued) cross-talk parameters $\nu(i)$ and $\tan(\varphi(i))$, where $\nu$ and $\varphi$ are respectively half the amplitude mismatch and half the phase mismatch between the I and Q transmit filters.

Keeping the notations of the section, for a given pair of sub-carriers, the parameters $\nu(i)$ and $\tan(\varphi(i))$ are obtained by obtaining the product of transmit filter complex gain by the cross-talk on the sub-carrier of index -I; deriving the transmit filter complex gain only on sub-carrier of index I; removing the gain from sub-carrier -i so that only the cross-talk remains and finally taking the real and imaginary part of the result to obtain $\nu(i)$ and $\tan(\varphi(i))$. This is summarized by the following complex operations:

$$\nu(i) = \Re\left( \frac{T(-i)}{T^*(i)} \right)$$

and

$$\tan[\varphi(i)] = -\Im\left( \frac{T(-i)}{T^*(i)} \right),$$

where * denotes the complex conjugation.

The compensation is performed by a linear combination of real and imaginary components of each pair of transmitted symbols $R(i)$ and $R(-i)$.

With the notations:

$$A = -\Im(T(i)) \quad ; B = \Re(T(i)) \, ; \, C = -\Im(T(-i)) \, ; \, D = \Re(T(-i))$$

the pre-compensated versions $A_c$ ; $B_c$ ; $C_c$ ; $D_c$ are obtained as described in Figure 7 by:

$$A_c = A + C\nu(i) + D \tan(\varphi(i))$$

$$B_c = B - D\nu(i) + C \tan(\varphi(i))$$

$$C_c = C + A\nu(i) - B \tan(\varphi(i))$$

$$D_c = D - B\nu(i) - A \tan(\varphi(i))$$

Simulation of I/Q mismatch compensation/pre-compensation for HIPERLAN/2

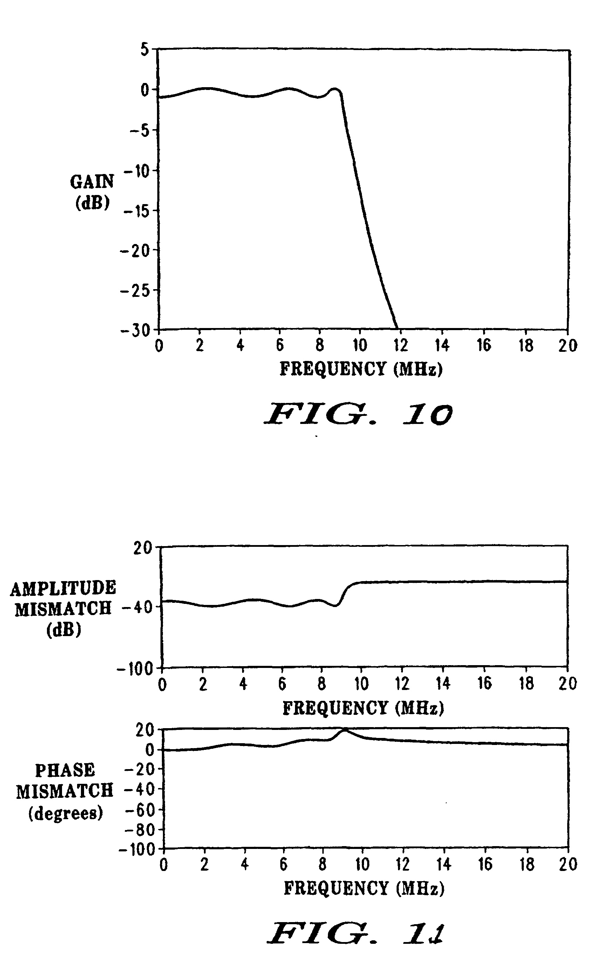

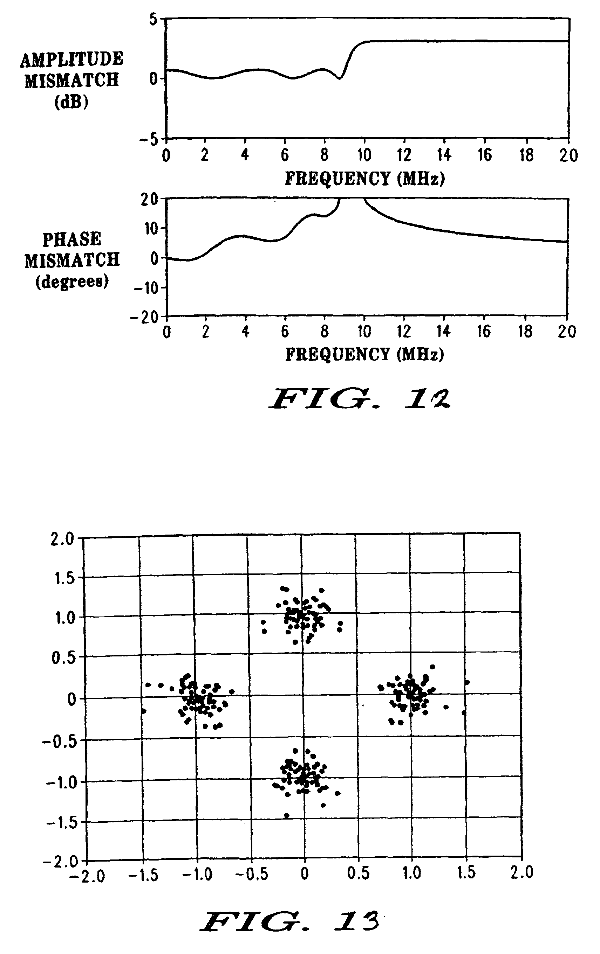

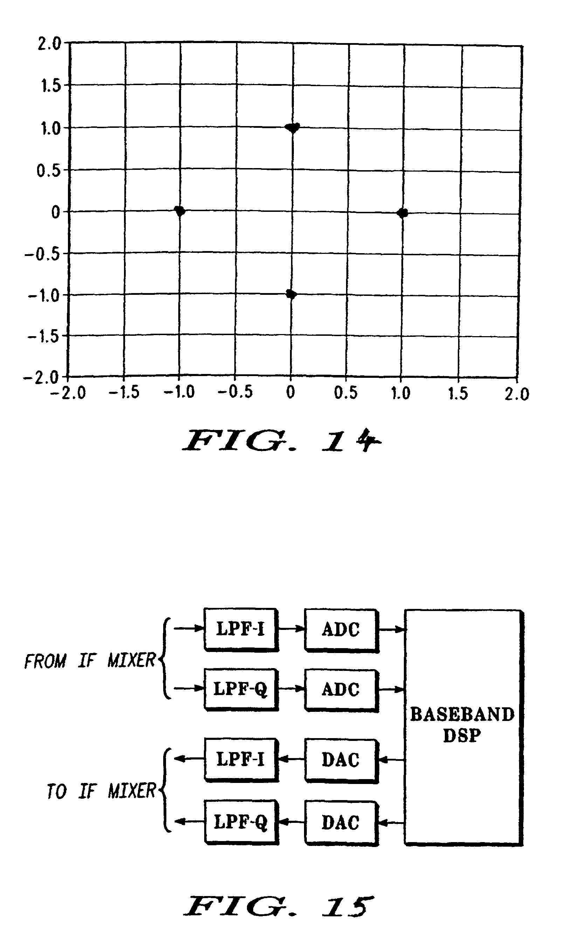

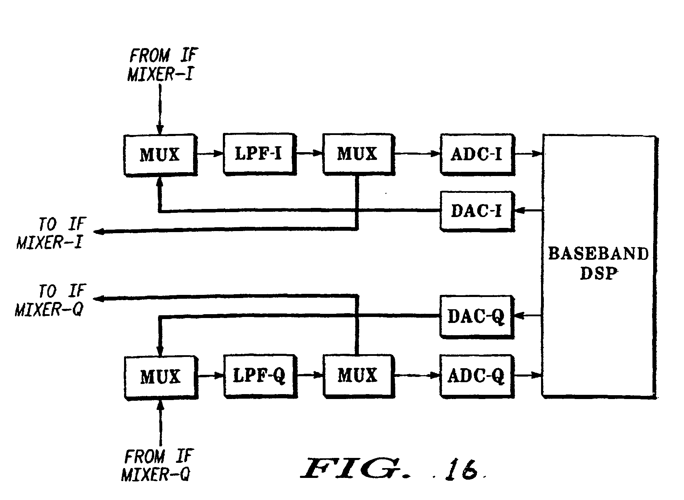

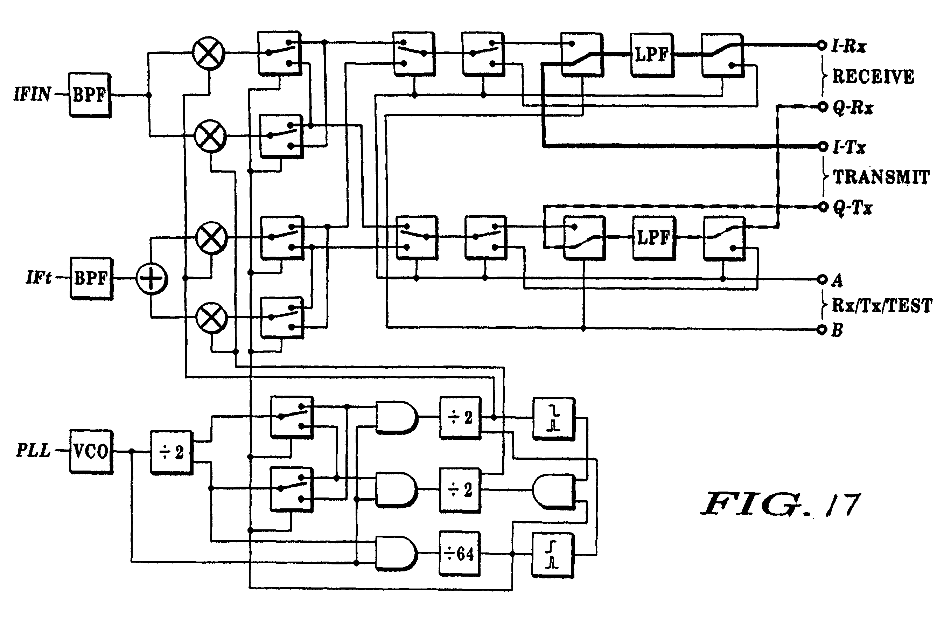

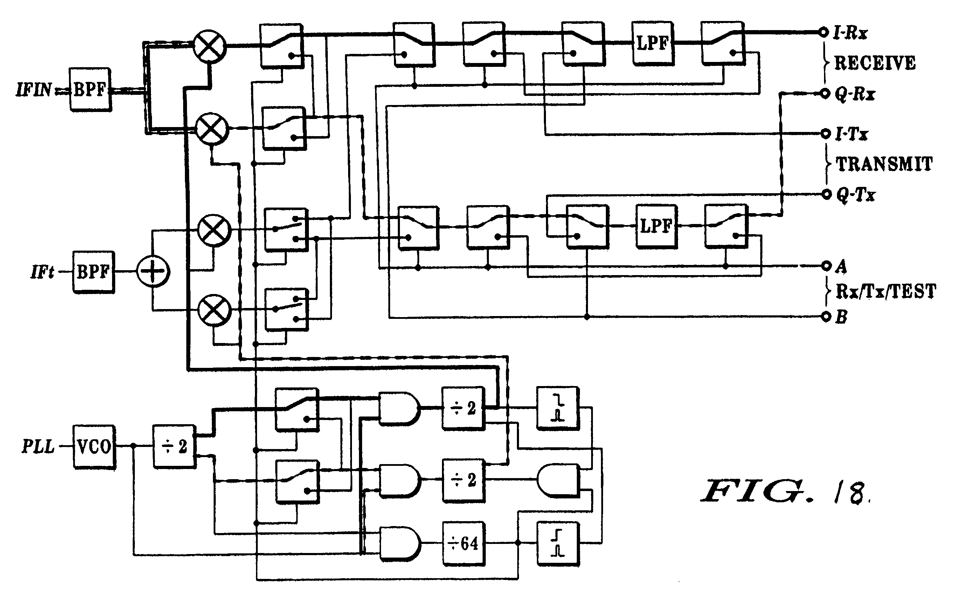

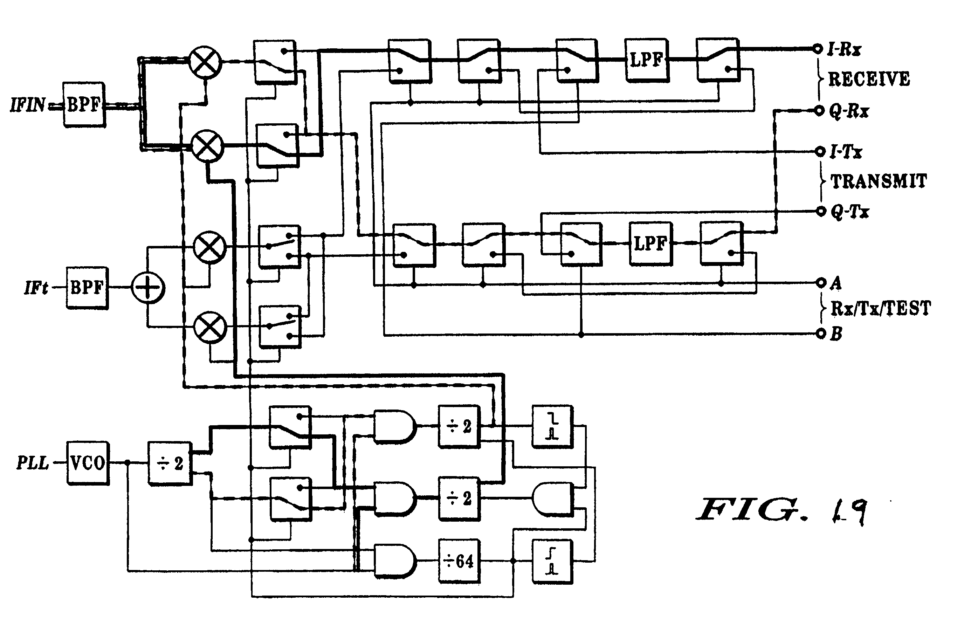

The HIPERLAN/2 system parameters are K=52 and N=64, the centre frequencies are separated by 20 MHz. On Figure 10, a typical base-band low-pass channel selectivity filter (LPF) is represented. In the simulation, we introduce a mismatch of the transmitter LPFs and a mismatch of the receiver LPFs, which is represented on Figures 11 and 12. In QPSK mode, when the mismatch is not compensated, the received constellation after channel compensation and with negligible noise is represented on Figure 13 and the rms vector error is -15.5 dB. When transmit pre-compensation and receive compensation are applied, the constellation is represented on Figure 14 and the rms vector error is -36 dB. Therefore, thanks to compensation and pre-compensation techniques, analog I-Q can be used to get transmission modes requiring more than 30 dB signal to noise ratio.

In the case of Hiperlan 2 protocol, the transmission is TDD (time domain duplex); in other words half-duplex. In such an environment, transmit and receive filters do not require to be carrying signals simultaneously. This feature allows the possibility of multiplexing the receive and transmit filters since the characteristics of these filters are the same independent of signal direction.

Hence as shown in Figures 16 and 17 (compare with Figure 15), it is possible to multiplex the input and output signal paths from one set of I-Q low pass filters using a set of multiplexers such that the information flow is directed to the correct destination.

A major advantage of this scheme is that besides less hardware and power consumption, there is only one set of digital compensation parameters to be stored. This removes the need to train the transmit filters and then the receive filters. Figures 18 to 21 show how the multiplexed base-band filter paths of the preferred embodiment work together with the mixer/oscillator equalization paths.

It will be appreciated that the invention has been described by way of examples only, and variation may be made to the embodiments described, without departing from the scope of invention.

**Claims**

1.  A method of signal mismatch compensation comprising the steps of:

    applying a first training signal, of known characteristics, to a circuit that includes at least one baseband filter; and
    receiving a baseband filtered training signal, from the circuit; the method **characterised by** the steps of:

    deriving a transfer function from the received baseband filtered signal;
    obtaining the inverse transfer function of the received baseband filtered signal; and
    applying the inverse transfer function to a subsequently received signal in order to correct any signal mismatch in the subsequently received signal.

2. A method according to claim 1 further **characterised by** the step of:

combining transmit and receive baseband filters to form a single set of filters which may be used in both a transmit and receive mode, in conjunction with one or more multiplexers.

3. A method according to claim 2 further **characterised by** the step of:

selecting transmit and receive paths by multiplexers before and after the baseband filters are switched to receive or transmit modes.

4. A method according to claim 1 or 2 further **characterised by** the steps of:

generating a test or training signal digitally; and
sending a time domain sample of the test or training signal to a digital to analog converter (DAC) and subsequently to a radio frequency (RF) transceiver in a test mode.

5. A method according to claim 4 wherein the test signal is routed through I and Q paths of a transmit chain or a receive chain.

6. Apparatus for compensating signal mismatch comprising:

a circuit that includes at least one baseband filter;
means for applying a first training signal, of known characteristics, to the circuit;
receiving means receiving a baseband filtered first training signal, from the circuit; the apparatus **characterised by**:

means for deriving a transfer function from the received baseband filtered first training signal;
means for obtaining an inverse transfer function of the received baseband filtered first training signal; and
means for applying the inverse transfer function to a subsequently received signal in order to correct any signal mismatch in the subsequently received signal.

7. Apparatus according to claim 6 further comprising transmit and receive baseband filters wherein the transmit and receive baseband filters are combined to form a single set of filters that may be used in both a transmit and receive mode of operation, in conjunction with one or more multiplexers.

8. Apparatus according to claim 7 further comprising transmit and receive paths that are selected by the multiplexers before and after the baseband filters are switched to receive or transmit modes.

9. Apparatus according to any of preceding claims 6 to 8 further **characterised by**:

means for generating a test or training signal digitally;
a digital to analogue converter (DAC);
a radio frequency (RF) transceiver; and
means for sending a time domain sample of the test or training signal to the DAC and subsequently to the RF transceiver in a test mode.

10. Apparatus according to claim 9 wherein the test or training signal is routed through I and Q paths of a transmit chain or a receive chain.

OTHERS          HYPERLAN2  CHANNELS          OTHERS

$C_1$  $C_2$  $C_3$  $C_4$  $C_5$

5.17
GHz

5.33
GHz

FREQ.

FIG. 1A

L01

FREQ.

FIG. 1B

FREQ.

FIG. 1C

L02

FREQ.

FIG. 1D

10   30   50
MHz

FREQ.

FIG. 1E

10   30   50
MHz

FREQ.

FIG. 1F

**FIG. 1G**

COMPLEX
SIGNALS

CYCLIC PREFIX
INSERTION

REAL
SIGNALS

$A(i)exp(jPH(i))$ → IFFT (SIZE N) → P TO S → DAC → TO I PATH

DAC → TO Q PATH

## FIG. 2

BASE BAND I/Q
GENERATION

BASE BAND
DEMODULATION

$A \sin\Omega_V t$
$+B \cos\Omega_V t$
$+C \sin\Omega_L t$
$+D \cos\Omega_L t$

$\Omega_V = \omega + \omega\beta$
$\Omega_L = \omega - \omega\beta$

$\cos\omega t$

$\sin\omega t$

LPF — I

LPF — Q

$\cos\omega\beta t$

$\sin\omega\beta t$

$\cos\omega\beta t$

$\sin\omega\beta t$

LPF — X1

LPF — X4

LPF — X2

LPF — X3

$\frac{D}{2}$   $\frac{B}{2}$

D CHANNEL   B CHANNEL

$\frac{A}{2}$   $\frac{C}{2}$

A CHANNEL   C CHANNEL

## FIG. 3a

A

$\omega\beta$   $\Omega_L$   $\omega$   $\Omega_V$

DC   BB   FREQ

$2\omega\beta$

## FIG. 3b

$$\left(\begin{matrix} +A \sin\Omega_v t + B \cos\Omega_v t \\ +C \sin\Omega_L t + D \cos\Omega_L t \end{matrix}\right) \cdot \cos\omega t \rightarrow I \qquad \left(\begin{matrix} +A \sin\Omega_v t + B \cos\Omega_v t \\ +C \sin\Omega_L t + D \cos\Omega_L t \end{matrix}\right) \cdot \sin\omega t \rightarrow Q \quad \text{(a)}$$

$$I = \frac{1}{2} \cdot \left(\begin{matrix} +A \cdot \sin\omega_\beta t + B \cdot \cos\omega_\beta t \\ -C \cdot \sin\omega_\beta t + D \cdot \cos\omega_\beta t \end{matrix}\right)$$

$$Q = \frac{1}{2} \cdot \left(\begin{matrix} +A \cdot \cos\omega_\beta t - B \cdot \sin\omega_\beta t \\ -C \cdot \cos\omega_\beta t + D \cdot \sin\omega_\beta t \end{matrix}\right) \quad \text{(b)}$$

$$I \cdot \cos_{\omega_\beta} t \rightarrow X1 = (+B+D)/4$$
$$Q \cdot \cos_{\omega_\beta} t \rightarrow X2 = (+A+C)/4$$
$$I \cdot \sin_{\omega_\beta} t \rightarrow X3 = (+A-C)/4$$
$$Q \cdot \sin_{\omega_\beta} t \rightarrow X4 = (-B+D)/4$$

(c)

*FIG. 4*

A - CHANNEL: X2+X3=A/2
B - CHANNEL: X1-X4=B/2
C - CHANNEL: X2-X3=C/2
D - CHANNEL: X1+X4=D/2

(d)

*FIG. 5*

$$\left(\begin{array}{c}+A \ \sin\Omega_v t +B \ \cos\Omega_v t \\ +C \ \sin\Omega_L t +D \ \cos\Omega_L t\end{array}\right) \cdot \cos(\omega t+\varepsilon)\cdot(1+\delta) \rightarrow I$$

$$\left(\begin{array}{c}+A \ \sin\Omega_v t +B \ \cos\Omega_v t \\ +C \ \sin\Omega_L t +D \ \cos\Omega_L t\end{array}\right) \cdot \sin(\omega t-\varepsilon)\cdot(1-\delta) \rightarrow Q$$

(a)

$$I = \frac{1}{2}(1+\delta)\cdot\left(\cos\varepsilon\cdot\left(\begin{array}{c}+A\cdot\sin\omega\beta t + B\cdot\cos\omega\beta t \\ -C\cdot\sin\omega\beta t + D\cdot\cos\omega\beta t\end{array}\right) -\sin\varepsilon\cdot\left(\begin{array}{c}+A\cdot\cos\omega\beta t -B\cdot\sin\omega\beta t \\ +C\cdot\cos\omega\beta t + D\cdot\sin\omega\beta t\end{array}\right)\right)$$

$$Q = \frac{1}{2}(1-\delta)\cdot\left(\cos\varepsilon\cdot\left(\begin{array}{c}+A\cdot\cos\omega\beta t -B\cdot\sin\omega\beta t \\ +C\cdot\cos\omega\beta t + D\cdot\sin\omega\beta t\end{array}\right) -\sin\varepsilon\cdot\left(\begin{array}{c}+A\cdot\sin\omega\beta t +B\cdot\cos\omega\beta t \\ -C\cdot\sin\omega\beta t + D\cdot\cos\omega\beta t\end{array}\right)\right)$$

(b)

$$I\cdot\cos_{\omega\beta}t \rightarrow X1 \ (1+\delta)\cdot(\cos\varepsilon\cdot(+B+D)+\sin\varepsilon\cdot(-A-C))\cdot1/4$$
$$Q\cdot\cos_{\omega\beta}t \rightarrow X2 \ (1-\delta)\cdot(\cos\varepsilon\cdot(+A+C)+\sin\varepsilon\cdot(-B-D))\cdot1/4$$
$$I\cdot\sin_{\omega\beta}t \rightarrow X3 \ (1+\delta)\cdot(\cos\varepsilon\cdot(+A-C)+\sin\varepsilon\cdot(+B-D))\cdot1/4$$
$$Q\cdot\sin_{\omega\beta}t \rightarrow X4 \ (1-\delta)\cdot(\cos\varepsilon\cdot(-B+D)+\sin\varepsilon\cdot(-A+C))\cdot1/4$$

(c)

$$(X2+X3)\cdot2/\cos\varepsilon = +A \quad -C\cdot\delta -D\cdot\tan\varepsilon \quad +B\cdot\delta\cdot\tan\varepsilon$$
$$(X1-X4)\cdot2/\cos\varepsilon = +B \quad +D\cdot\delta -C\cdot\tan\varepsilon \quad -A\cdot\delta\cdot\tan\varepsilon$$
$$(X2-X3)\cdot2/\cos\varepsilon = +C \quad -A\cdot\delta -B\cdot\tan\varepsilon \quad +D\cdot\delta\cdot\tan\varepsilon$$
$$(X1+X4)\cdot2/\cos\varepsilon = +D \quad +B\cdot\delta -A\cdot\tan\varepsilon \quad -C\cdot\delta\cdot\tan\varepsilon$$

(d)

SUBCARRIER CROSSTALK          I/Q CROSSTALK

*FIG. 6*

FIG. 7

FIG. 8

EP 1 511 254 A2

FIG. 9

FIG. 10

FIG. 11

FIG. 12

FIG. 13

**FIG. 14**

**FIG. 15**

FIG. 16.

*FIG. 17*

*FIG. 18.*

FIG. 19

FIG. 20

FIG. 21

EP 1 511 254 A2